(19) Europäisches Patentamt
European Patent Office
Office européen des brevets

(11) Veröffentlichungsnummer: **0 120 302**
**B1**

(12) **EUROPÄISCHE PATENTSCHRIFT**

(45) Veröffentlichungstag der Patentschrift:
21.01.87

(51) Int. Cl.⁴: **B 23 C 9/00**

(21) Anmeldenummer: **84101915.1**

(22) Anmeldetag: **23.02.84**

(54) Universalfräskopf für eine Werkzeugmaschine.

(30) Priorität: **28.03.83 DE 3311289**

(43) Veröffentlichungstag der Anmeldung:
**03.10.84 Patentblatt 84/40**

(45) Bekanntmachung des Hinweises auf die Patenterteilung: **21.01.87 Patentblatt 87/04**

(84) Benannte Vertragsstaaten:
**CH DE FR GB IT LI**

(56) Entgegenhaltungen:
**FR-A- 572 650
FR-A- 929 135
FR-A- 2 166 741
FR-A- 2 307 615
US-A- 2 307 222
US-A- 2 987 969**

(73) Patentinhaber: **Th. Kekeisen GmbH + Co. Maschinen-
und Werkzeugfabrik
Schmiedstrasse 27
D-7958 Laupheim 1 (DE)**

(72) Erfinder: **Kneidl, Horst Josef
Von-Rot-Weg 7
D-7959 Schwendi-Bussmannshausen (DE)**
Erfinder: **Kirsching, Franz, Dipl.-Ing.
Ravensburgerstrasse 74
D-7900 Ulm/Wiblingen (DE)**

(74) Vertreter: **Eitle, Werner, Dipl.-Ing. et al
Hoffmann, Eitle & Partner Patentanwälte Arabellastrasse 4
D-8000 München 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft einen Universalfräskopf für eine Werkzeugmaschine, mit einem die Werkzeugspindel tragenden Werkzeugspindelgehäuse, welches um eine senkrecht zur Werkzeugspindelachse verlaufende, in der Normalstellung des Fräskopfes vertikal ausgerichtete Achse (Z-Achse) drehbar in einem Schwenkgehäuse gelagert ist, das um eine senkrecht zu dieser Achse verlaufende waagrechte Achse (Y-Achse) drehbar in einem Spindelkasten der Werkzeugmaschine gelagert ist, mit einem Antrieb, der eine achsgleich mit der vertikal ausgerichteten Achse gelagerte Treibwelle umfaßt, die über ein Kegelradpaar mit der Werkzeugspindel in Drehverbindung steht und eine achsgleich mit der waagrechten Achse gelagerte Antriebswelle besitzt, die mit der Treibwelle in Drehverbindung steht, sowie mit Einrichtungen, mit denen das Werkzeugspindelgehäuse an dem Schwenkgehäuse sowie das Schwenkgehäuse an dem Spindelkasten lösbar festlegbar ist.

Universalfräsköpfe dieser Art (vgl. beispielsweise US-A-2 307 222) weisen — wie bereits ein Blick auf die Figuren 1 und 3 dieser Druckschrift zeigt — eine relativ ausladende Bauweise auf. Aufgrund dieser ausladenden Bauweise ergeben sich — in der Normalstellung des Fräskopfes betrachtet — zwangsläufig eine Reihe von Nachteilen, von denen im folgenden die wichtigsten genannt sind :

1. Die Arbeitshöhe gegenüber dem Frästisch ist begrenzt, da das die Werkzeugspindel tragende Werkzeugspindelgehäuse weit über die Unterkante des Spindelkastens hinausragt.

2. Die Zurückziehmöglichkeiten des Fräskopfes in der Y-Achse und daraus resultierend die Bearbeitungsmöglichkeiten am Werkstück hinsichtlich der Tiefe sind eingeschränkt.

3. Die Bearbeitungsmöglichkeiten für die Innenbearbeitung von Werkstücken sind begrenzt, da aufgrund der relativ großen Ausladung des Werkzeugspindelgehäuses für das Verschwenken relativ viel Raum benötigt wird.

Die oben geschilderten Nachteile kommen verstärkt dann zum Tragen, wenn Universalfräsköpfe der gattungsgemäßen Art mit automatischen Verdreheinrichtungen ausgestattet werden sollen, wie sie beispielsweise aus der FR-A-2 307 615 bei einem Universalfräskopf unterschiedlicher Gattung bekannt sind. Der Einsatz von automatischen Verdreheinrichtungen erfordert nämlich die Anordnung kräftig dimensionierter hydraulischer Aus- und Einrückvorrichtungen, die — wie bereits ein Blick auf die Figur 4 der FR-A zeigt — relativ viel Platz benötigen und dadurch die ausladende Bauweise derartiger Fräsköpfe noch erhöhen. Zugeständnisse hinsichtlich der Dimensionierung der Teile dieser Aus- und Einrückvorrichtungen zum Zwecke der Reduzierung der ausladenden Bauweise sind kaum möglich, da sie auf Kosten der Bearbeitungsgenauigkeit und des Leistungsflusses gehen.

Aufgabe der vorliegenden Erfindung ist es daher, einen Universalfräskopf der eingangs beschriebenen Art derart weiterzubilden, daß selbst bei Vorsehen einer automatischen Verdreheinrichtung eine kompakte, selbst für höchste Drehmomente geeignete Bauweise ermöglicht wird, die hohen Genauigkeitsansprüchen gerecht wird.

Diese Aufgabe wird erfindungsgemäß bei einem gattungsgemäßen Universalfräskopf dadurch gelöst, daß (in der Normalstellung des Fräskopfes betrachtet) die Achse der Werkzeugspindel derart nahe an die Antriebswellenachse herangelegt ist, daß die Unterkante des Werkzeugspindelgehäuses etwa mit der Unterkante des Spindelkastens fluchtet, wobei eine im Schwenkgehäuse gelagerte, mit der Antriebswelle einen stumpfen Winkel einschließende Verbindungswelle vorgesehen ist, die mit ihrem einen Ende über Kegelräder mit der Antriebswelle und mit ihrem anderen Ende über Kegelräder mit der Treibwelle in Verbindung steht.

Durch die erfindungsgemäße Ausgestaltung ergeben sich folgende Vorteile :

1. Durch die spezielle Ausgestaltung in Verbindung mit der « schrägen » Verbindungswelle (18) kann die Werkzeugspindelachse (9) (in Normalstellung des Kopfes betrachtet) äußerst nahe an die Antriebswellenachse (17) herangelegt werden, wodurch sich die maximale Arbeitshöhe über Tisch vergrößert. Das bedeutet : Bei gleicher Arbeitshöhe können bei einer mit dem erfindungsgemäßen Kopf ausgerüsteten Maschine der Ständer bzw. die am Ständer befestigten Führungen kürzer ausgeführt werden, was außer einer Verringerung des Material- und Fertigungsaufwands auch zu einer Verbesserung des Verformungsverhaltens der Maschine führt.

2. Durch die spezielle Ausgestaltung in Verbindung mit der « schrägen » Verbindungswelle (18) wird im Schwenkgehäuse (12) viel Platz geschaften, sodaß für die Gestaltung der Treibwelle (19), der Treibwellenlagerung (39), der Werkzeugspindelgehäuselagerung, der Stirnverzahnung sowie deren Ein- und Ausrückeinrichtung viele konstruktive Lösungen möglich sind. Insbesondere können die genannten Funktionsteile äußerst kräftig dimensioniert werden, was eine Verbesserung der Genauigkeit und eine Erhöhung des Leistungsdurchflußes bewirkt.

3. Durch die spezielle Ausgestaltung in Verbindung mit der « schrägen » Verbindungswelle wird eine kompakte Bauform erzielt, aufgrund der der Frässchlitten in jeder Spindelstellung sehr weit zurückgezogen werden kann (in der Y-Achse), womit die Bearbeitung auch sehr tiefer Werkstücke möglich ist. Außerdem können dadurch die Führungsbahnen des Frässchlittens sehr lang ausgeführt werden (bis nahe an den Arbeitstisch heran), womit die Arbeitsgenauigkeit bei voll zurückgefahrenem Frässchlitten verbessert wird.

4. Durch die erzielte kompakte Bauform steigen die Möglichkeiten für Innenbearbeitungen z. B. an hohlen Grundgestellen. Auch wird damit die Gefahr der Kollision des Fräskopfes mit dem Werkstück verringert.

5. Durch die spezielle Ausgestaltung in Verbindung mit der « schrägen » Anordnung der Verbindungswelle wird die Gefahr des Außereingriffgeratens der Verzahnungen der Kegelräder von Treibwelle und Verbindungswelle beim Verdrehen des Werkzeugspindelgehäuses gegenüber dem Schwenkgehäuse verringert, da der Winkel zwischen den Zahnflanken und der beim Lösen der Stirnverzahnung axial zu verschiebenden Treibwelle verkleinert wird.

6. Durch die spezielle Ausgestaltung in Verbindung mit der « schrägen » Verbindungswelle wird darüber hinaus eine in sicherheitstechnischer Hinsicht vorteilhafte Gestaltung erzielt, da praktisch keine abstehenden Bauteile oder Baugruppen vorhanden sind. Durch diese Gestaltung hat der erfindungsgemäße Universalfräskopf darüber hinaus ein äußerst ansprechendes Design.

Gemäß einer vorteilhaften Weiterbildung weist das Schwenkgehäuse jeweils konzentrisch zur Treibwelle und zur Antriebswelle eine Stirnverzahnung auf, die hydraulisch ein- und ausrückbar mit einer entsprechenden Stirnverzahnung am Werkzeugspindelgehäuse bzw. am Spindelkasten zusammenwirkt, wobei zum Verdrehen des Schwenkgehäuses gegenüber dem Spindelkasten und des Werkzeugspindelgehäuses gegenüber dem Schwenkgehäuse hydraulische Dreheinrichtungen vorgesehen sind.

Durch diese Merkmale ist ein Fräskopf geschaffen, bei dem das Lösen des Werkzeugspindelgehäuses gegenüber dem Schwenkgehäuse sowie des Schwenkgehäuses gegenüber dem Spindelkasten einschließlich des Verdrehens der beiden Gehäuse zur Erzielung einer bestimmten Lage der Werkzeugspindel gegenüber dem Werkstück, und das Festlegen der Gehäuse gegeneinander sowie gegenüber dem Spindelkasten vollautomatisch, d. h. ohne manuelle Eingriffe von Terminal oder vom Schaltpult aus erfolgen kann.

Von besonderem Vorteil ist dabei, daß mit vergleichsweise geringem technischen Aufwand eine äußerst präzise Positionierung des Werkzeugspindelgehäuses gegenüber dem Schwenkgehäuse und des Schwenkgehäuses gegenüber dem Spindelkasten möglich ist. So wird mittels der hydraulischen Dreheinrichtung beim Verstellvorgang lediglich eine Grobpositionierung der Gehäuse gegenüber dem Spindelkasten vorgenommen, während die Feinpositionierung durch die Stirnverzahnung erfolgt, die die Einhaltung kleinster Winkeltoleranzen zuläßt. Mit anderen Worten : Aufgrund der Feinpositionierung über die Stirnverzahnung muß die hydraulische Dreheinrichtung lediglich eine Grob-Positionierung beim Verdrehvorgang vornehmen, wodurch der steuerungstechnische Aufwand für die hydraulische Dreheinrichtung erheblich herabgesetzt wird.

Da gemäß dieser Weiterbildung das Ein- und Ausrücken der Stirnverzahnung auf hydraulischem Wege vorgenommen wird, entfällt auch die Anordnung zusätzlicher Einrichtungen zum Festlegen der Gehäuse nach erfolgtem Verdrehvorgang. So ist es lediglich erforderlich, für den Einrückvorgang eine hydraulische Beaufschlagung mit einem höheren Druck vorzusehen, um die für die Festlegung erforderlichen Kräfte zur Verfügung zu haben. Eine manuelle Tätigkeit oder der Einsatz von Schraubhilfen ist nicht erforderlich.

Grundsätzlich kann die Stirnverzahnung am Werkzeugspindelgehäuse bzw. am Schwenkgehäuse und dem Spindelkasten in jeder beliebigen Weise angeordnet sein. Eine technisch besonders zweckmäßige Lösung ergibt sich jedoch, wenn die Stirnverzahnung jeweils auf einem Ring angeordnet ist, der im jeweiligen Gehäuse bzw. dem Spindelkasten befestigt ist.

Um sicherzustellen, daß beim Verdrehen der Gehäuse gegeneinander bzw. gegenüber dem Spindelkasten die Flucht der Wellen sowie der Lagerung und der genaue Eingriff der für den Antrieb der Werkzeugspindel erforderlichen Zahnräder erhalten bleibt, sind gemäß einer vorteilhaften Weiterbildung der Erfindung das Werzeugspindelgehäuse im Schwenkgehäuse und das Schwenkgehäuse im Spindelkasten jeweils über ein Lagerteil gelagert, wobei das Lagerteil als Buchse ausgebildet ist, die zumindest mit ihrer einen Stirnseite am Werkzeugspindelgehäuse bzw. Schwenkgehäuse befestigt und zumindest auf einem Teil ihrer Außenseite als Kolbenanordnung ausgebildet ist, welche in eine zugeordnete Zylinderanordnung am Schwenkgehäuse bzw. im Spindelkasten hineinragt.

Aufgrund dieser Ausgestaltung erhält das Lagerteil eine Doppelfunktion. So dient das Lagerteil einerseits als Lager der Gehäuse gegeneinander bzw. gegenüber dem Spindelkasten und andererseits als Verschiebeeinheit, mit der bei entsprechender Beaufschlagung durch eine Hydraulikflüssigkeit die Stirnverzahnung ein- bzw. ausgerückt, sowie die notwendige Spannkraft für das Festlegen erzeugt werden kann.

Vorteilhaft ist es bei einer derartigen Ausgestaltung, daß die Buchse auf ihrer Außenseite abgestuft ausgebildet ist. Aufgrund dieser Abstufung ist es möglich, die einzelnen Funktionen, nämlich die Lagerfunktion und die Funktion als Ein- oder Ausrückkolben räumlich zu trennen, wodurch sich für den Konstrukteur mehr konstruktive Möglichkeiten ergeben.

Um eine automatische hydraulische Werkzeugspannung zu ermöglichen, ist es erforderlich, Hydraulikflüssigkeit zum Werkzeugspindelgehäuse zu führen. Aufgrund der Ausbildung des Lagerteiles als Buchse ergibt sich für die Führung der Hydraulikkanäle in den Gehäusen eine Vielzahl von Möglichkeiten, so daß ohne weiteres eine konstruktiv einfach zu realisierende Lösung gefunden werden kann, bei der die automatische Werkzeugspannung in allen Schwenklagen durchführbar ist.

Ein weiterer Vorteil der Ausbildung des Lagerteils als Buchse besteht ferner darin, daß die Buchse auch die Lagerung für die Treib- bzw. Antriebswelle aufnehmen kann. Bei einer derartigen Konstruktion muß die Treib- bzw. Antriebswelle beim Aus- oder Einrückvorgang gegenüber ihrer Lagerung nicht verschoben werden, wodurch die Konstruktion vereinfacht wird.

Gegenüber bekannten Universalfräskopfkonstruktionen, bei denen das Spindelgehäuse gegenüber dem Schwenkgehäuse und das Schwenkgehäuse gegenüber dem Spindelkasten nach Lösen der Feststelleinrichtungen seine Stellung in axialer Richtung der Treib- bzw. Antriebswelle nicht ändert, erfolgt erfindungsgemäß aufgrund der Anordnung der Stirnverzahnung vor dem Verdrehvorgang ein geringfügiges Verschieben in axialer Richtung. Da der Betrag dieser Verschiebung, welcher etwas größer ist als die Höhe der Stirnverzahnung, relativ gering ist, kann dieser Verschiebeweg generell von der Verzahnung der Kegelräder aufgenommen werden, ohne daß diese außer Eingriff gelangen. Es ist jedoch zweckmäßig, die Verzahnung der Kegelräder von vornherein derart zu wählen, daß sie auch bei ausgerückter Stirnverzahnung stets voll in Eingriff bleiben.

Besonders gut eignet sich hierfür die für Kegelräder bei Werkzeugmaschinen bewährte Bogenverzahnung, insbesondere jedoch eine Paloid-Verzahnung.

Im folgenden ist zur weiteren Erläuterung und zum besseren Verständnis ein Ausführungsbeispiel der Erfindung unter Bezugnahme auf die beigefügten Zeichnungen näher beschrieben.

Figur 1   zeigt in einer perspektivischen Ansicht schematisch eine Universal-Bett-Fräs- und Bohrmaschine, welche mit einem Universalfräskopf der erfindungsgemäßen Art ausgestattet ist ;

Figuren 2 und 3 zeigen in vergrößertem Maßstab den Universalfräskopf gemäß Fig. 1 in Normalstellung in einer Seiten- und einer Vorderansicht ;

Figur 4   zeigt den erfindungsgemäßen Universalfräskopf nach den Figuren 1 bis 3 schematisch und teilweise aufgebrochen in einer etwa der Figur 2 entsprechenden Ansicht, und

Figur 5   zeigt schematisch ein bevorzugtes Ausführungsbeispiel einer hydraulischen Dreheinrichtung in einem Querschnitt.

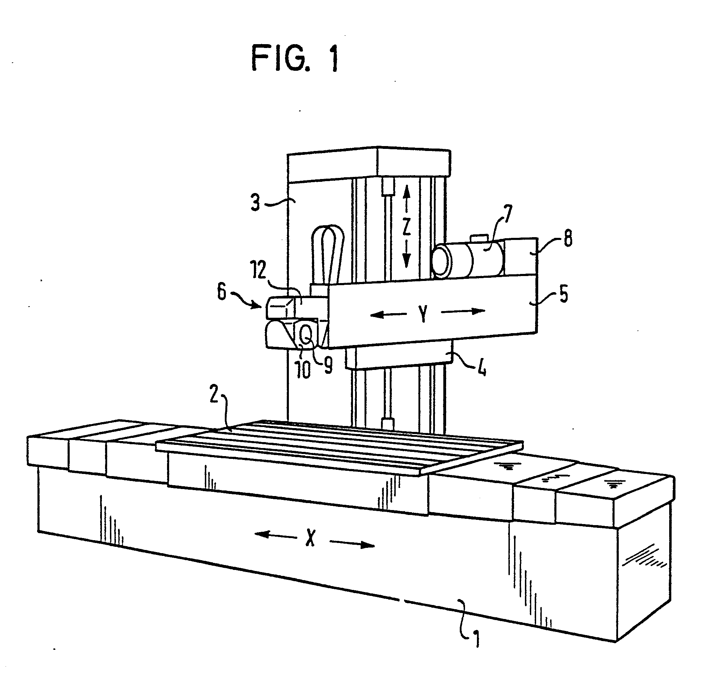

Die in Figur 1 dargestellte Universal-Bett-Fräs- und Bohrmaschine besitzt ein Maschinengestell 1, auf dessen Oberseite in herkömmlichen Flachführungen ein Tisch 2 hin- und herverfahrbar (X-Achse) gelagert ist.

Das Maschinengestell 1 ist mit einem Ständer 3 verbunden, der auf seiner einen Seite einen vertikal auf- und abverfahrbaren (Z-Achse) Schlitten 4 trägt. Auf dem Schlitten 4 ist ein Spindelkasten 5 horizontal zum Maschinengestell hin- und herverfahrbar (Y-Achse) gelagert. Der Spindelkasten 5 trägt an seinem dem Maschinengestell 1 zugewandten Ende den erfindungsgemäßen Universalfräskopf 6 und an seinem anderen Ende einen Elektromotor 7 und enthält in 5 und 8 eine Getriebeeinheit zum Antrieb einer Werkzeugspindel 9 des Fräskopfes 6.

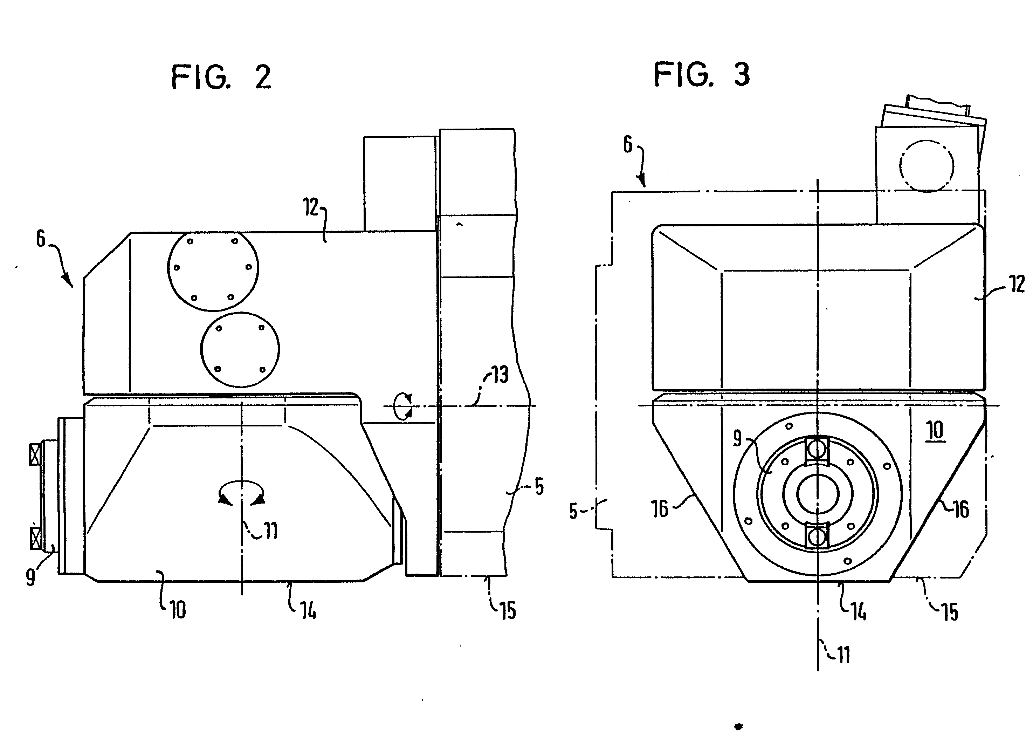

Wie insbesondere aus den Figuren 2 bis 4 zu entnehmen ist, ist die Werkzeugspindel 9 in einem Werkzeugspindelgehäuse 10 gelagert, welches — in der Normalstellung des Fräskopfes — um eine senkrecht zur Werkzeugspindelachse verlaufende, vertikal ausgerichtete Achse 11 (Z-Achse) drehbar in einem Schwenkgehäuse 12 gelagert ist.

Das Schwenkgehäuse 12 wiederum ist um eine senkrecht zur Achse 11 verlaufende, waagrechte Achse 13 (Y-Achse) drehbar in dem Spindelkasten 5 gelagert.

Wie aus den Figuren ferner hervorgeht, ist die Achse der Werkzeugspindel 9 derart dicht an die waagrechte Achse 13 herangelegt, daß die Unterkante 14 des Werkzeugspindelgehäuses 10 etwa mit der Unterkante 15 des Spindelkastens 5 fluchtet. Dadurch erhält das Schwenkgehäuse 12 eine abgewinkelte Form, wie sie sich insbesondere aus Figur 2 ergibt.

Um die Einsatzmöglichkeiten beim Fräs- oder Bohrvorgang zu verbessern, ist das Werkzeugspindelgehäuse 10 darüber hinaus im Bereich seiner Seitenflächen 16 abgeschrägt, wie dies insbesondere aus Figur 3 ersichtlich ist.

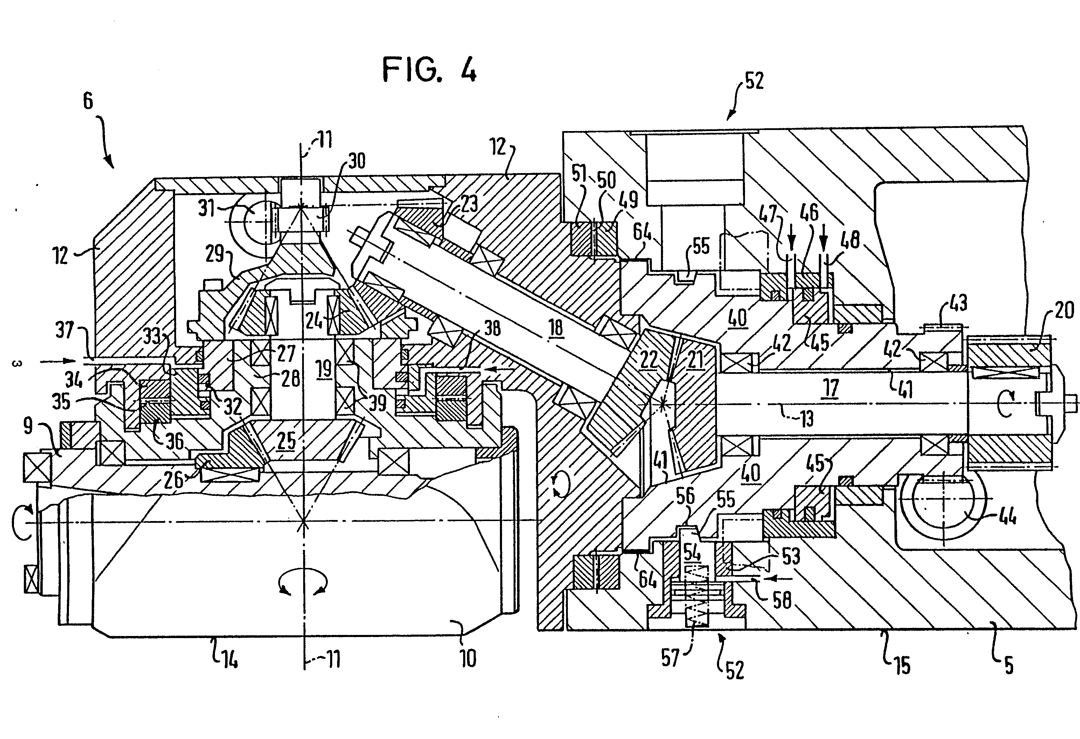

Der Antrieb der Werkzeugspindeln 9 erfolgt, wie aus Figur 4 hervorgeht, über drei miteinander in Drehverbindung stehende Wellen, nämlich die achsgleich mit der Drehachse 13 angeordnete Antriebswelle 17, die daran anschließende, schräg nach oben verlaufende Verbindungswelle 18 sowie die in der Drehachse 11 liegende Treibwelle 19. Das Drehmoment wird dabei über ein in Figur 1 nicht dargestelltes Zahnrad auf ein Ritzel 20 übertragen, welches an dem dem Schwenkgehäuse 12 abgewandten Ende der Antriebswelle 17 befestigt ist. An ihrem dem Ritzel 20 entgegengesetzten Ende trägt die Antriebswelle 17 ein Kegelrad 21, welches mit einem Kegelrad 22 kämmt, das auf einem Ende der schräg nach oben verlaufenden Verbindungswelle 18 angeordnet ist. Das dem Kegelrad 22 entgegengesetzte Ende der Verbindungswelle 18 trägt ebenfalls ein Kegelrad 23, welches mit einem Kegelrad 24 kämmt, das auf dem oberen Ende der vertikal verlaufenden Treibwelle 19 befestigt ist. An ihrem unteren Ende besitzt die Treibwelle ein Kegelrad 25, welches mit einem Kegelrad 26 kämmt, das auf der Außenseite der Werkzeugspindel 9 drehfest angeordnet ist.

Die Lagerung des Werkzeugspindelgehäuses 10 im Schwenkgehäuse 12 erfolgt über ein Lagerteil in Form einer Buchse 27, die drehfest auf einen zylindrischen Ansatz 28 des Werkzeugspindelgehäuses 10 aufgeschoben ist. Die Buchse 27 trägt im Bereich ihrer oberen Stirnfläche ein Joch 29, welches mit einem achsgleich mit der Drehachse 11 angeordneten Ritzel 30 ausgestattet ist, das mit seiner Zahnstange 31 über eine hydraulische Dreheinrichtung in Eingriff steht.

Die Buchse 27 ist auf ihrer Außenseite in ihrem unteren Abschnitt als Kolben 32 ausgebildet, der in einer im Schwenkgehäuse 12 befestigten Kolbenbüchse 33 in Grenzen auf- und abverschiebbar gelagert ist. Auf der Außenseite der Kolbenbüchse 33 ist ferner ein fest mit dem Schwenkgehäuse 12 verbundener Ring 34 vorgesehen, der konzentrisch zur Drehachse 11 angeordnet ist und auf seiner in Normalstellung des Fräskopfes nach unten gerichteten Stirnfläche eine Stirnverzahnung 35 trägt. Diese Stirnverzahnung 35 steht mit einer Stirnverzahnung eines Ringes 36 in Eingriff, der drehfest mit dem Werkzeugspindelgehäuse 10 verbunden ist.

In dem Schwenkgehäuse 12 sind ferner Hydraulikkanäle 37 und 38 vorgesehen. Diese Hydraulikkanäle sind derart angeordnet, daß beim Einspeisen von Hydraulikflüssigkeit in den Kanal 37 die Oberseite des Kolbens 32 und beim Einspeisen von Hydraulikflüssigkeit in den Kanal 38 die Unterseite des Kolbens 32 beaufschlagt wird.

Auf der Innenseite des zylindrischen Ansatzes 28 des Werkzeugspindelgehäuses 10 sind ferner Nuten angeordnet, in denen Lager 39 für die Treibwelle 19 ruhen.

Das Schwenkgehäuse 12 ist ebenfalls über ein Lagerteil in Form einer Buchse 40 im Spindelkasten 5 gelagert. Diese Buchse 40 besitzt eine Bohrung 41, die derart bemessen ist, daß sie die Antriebsschwelle 17 einschließlich der Kegelräder 21 und 22 aufnehmen kann. In der Buchse 40 sind ferner Ausnehmungen für Lager 42 der Antriebswelle 17 vorgesehen.

Mit ihrer in Figur 4 linken Stirnfläche ist die Buchse 40 fest mit dem Schwenkgehäuse 12 über nicht dargestellte Schrauben verbunden. Im Bereich ihres dieser Stirnfläche entgegengesetzten Endes trägt die Buchse 40 ein Ritzel 43, welches mit einer Zahnstange 44 über eine zweite hydraulische Verdreheinrichtung in Eingriff steht.

Auf ihrer Außenseite ist die Buchse 40 abgestuft ausgebildet, wobei die der Anschlußstirnfläche an das Schwenkgehäuse 12 benachbarte Stufe als Lagerfläche 64 dient. Etwa in der Mitte der Buchse 40 ist in einer Stufe ein Ring 45 befestigt, der in einer Kolbenbüchse 46 in gewissen Grenzen in Richtung der Drehachse hin- und herverschiebbar gelagert ist, und dessen Stirnflächen als Kolbenflächen ausgebildet sind.

In die Kolbenbüchse 46 münden zwei Hydraulikkanäle 47 und 48 derart ein, daß beim Einspeisen von Hydraulikflüssigkeit in den Hydraulikkanal 47 die dem Schwenkgehäuse 12 zugewandte Stirnseite des Ringes 45 und beim Einspeisen von Hydraulikflüssigkeit durch den Kanal 48 die dem Schwenkgehäuse 12 abgewandte Stirnseite des Ringes 45 beaufschlagt wird.

Im Bereich der Lagerfläche 64 der Büchse 40 ist im Spindelkasten 5 ein Ring 49 befestigt, der auf seiner dem Schwenkgehäuse 12 zugewandten Seite eine Stirnverzahnung 50 trägt. Mit dieser Stirnverzahnung 50 steht eine entsprechende Stirnverzahnung im Eingriff, die auf der Stirnseite eines Ringes 51 angeordnet ist, der am Schwenkgehäuse 12 befestigt ist.

Im dem Spindelkasten 5 ist ferner eine zwei einander gegenüberliegende Einheiten umfassende Sicherheitsverriegelung 52 angeordnet. Jede Einheit dieser Sicherheitsverriegelung 52 besteht aus einer Büchse 53, in der ein Verriegelungskolben 54 senkrecht zur Drehachse 13 hin- und herverschiebbar gelagert ist. Der Verriegelungskolben 54 besitzt eine Nase 55, die in eine Verriegelungsnut 56 in der Buchse 40 eingreift. Der Verriegelungskolben 54 wird von einer Feder 57 beaufschlagt, die die Nase 55 des Kolbens in die Verriegelungsnut 56 einschiebt. In der Büchse 53 ist ein Hydraulikkanal 58 derart angeordnet, daß der Verriegelungskolben 54 entgegen der Kraft der Feder 57 mit Hydraulikflüssigkeit beaufschlagt werden kann.

Eine der Sicherheitsverriegelung 52 entsprechende Sicherheitsverriegelung ist auch im Schwenkgehäuse 12 angeordnet, der Übersichtlichkeit halber jedoch nicht dargestellt. Der Verriegelungskolben dieser zweiten Sicherheitsverriegelung ist in einer Büchse im Schwenkgehäuse 12 gelagert und greift mit seiner Nase in eine nicht dargestellte Verriegelungsnut im Joch 29 ein.

Das vollautomatische Verschwenken der Werkzeugspindel 9 einschließlich der Festlegung bzw. Verriegelung in der neuen Arbeitsstellung erfolgt nun in folgender Weise :

In der Arbeitsstellung sind die Hydraulikkanäle 38 und 47 mit etwa 160 bar beaufschlagt. Dadurch werden die Ringe 34 und 36 bzw. 49 unt 51 mit ihren Stirnverzahnungen fest aufeinandergepreßt, so daß das Werkzeugspindelgehäuse 10 mit dem Schwenkgehäuse 12 und das Schwenkgehäuse 12 mit dem Spindelkasten 5 fest verbunden ist. In dieser Phase wirkt Hydraulikflüssigkeit auch über den Hydraulikkanal 58 auf die Verriegelungskolben 54, so daß sich diese gegen die Kraft der Federn 57 in ihrer zurückgezogenen Stellung befinden, in der die Nasen 55 der Verriegelungskolben 54 aus den Verriegelungsnuten 56 herausgezogen sind.

Soll nun die Werkzeugspindel zur Durchführung eines neuen Arbeitsganges in eine neue Stellung verbracht werden, so wird lediglich die Zufuhr von Hydraulikflüssigkeit zu den Hydraulikkanälen 38 und 47 unterbunden und Hydraulikflüssigkeit mit einem Druck von etwa 25 bar in die Hydraulikkanäle 37 und 48 eingeleitet. Dadurch wird die Buchse 27 um einem gewissen Betrag nach unten und die Buchse 40 nach links verschoben, so daß die Stirnverzahnungen 35 und 50 der Ringe 34 und 36 bzw. 49 und 51 außer Eingriff gelangen.

Da bei dieser Verschiebung das Werkzeugspindelgehäuse 10 vom Schwenkgehäuse 12 und das Schwenkgehäuse 12 vom Spindelkasten 5 um einen gewissen Betrag abrückt, verlagert auch das Kegelrad 24 seine Lage gegenüber dem Kegelrad 23 und das Ritzel 20 seine Lage gegenüber dem Spindelkasten 5. Das Abrücken zum Außereingriffgelangen der Stirnverzahnungen bewegt sich jedoch lediglich in einer Größenordnung, die sicherstellt, daß die Zähne der Kegelräder 24 und 23 sowie Ritzel 20 zum Gegenrad nicht außer Eingriff gelangen.

Sind die Stirnverzahnungen auf die oben beschriebene Weise außer Eingriff gebracht worden, so erhalten die hydraulischen Dreheinrichtungen ein bestimmtes Signal. Dadurch wird im Schwenkgehäuse 12 die Zahnstange 31 um einen bestimmten Betrag verschoben, welche über das Ritzel 30 und das Joch 29 die Buchse 27 und damit das Werkzeugspindelgehäuse 10 mit der Werkzeugspindel 9 in die gewünschte Stellung bringt. Gleichzeitig bzw. vor oder nach diesem Vorgang wird die Zahnstange 44 verschoben, welche über das Ritzel 43 über die Buchse 40 das Schwenkgehäuse 12 in die neue Stellung dreht. Im Anschluß daran wird die Zufuhr von Hydraulikflüssigkeit zu den Hydraulikkanälen 37 und 48 unterbunden und erneut Druckflüssigkeit in die Hydraulikkanäle 38 und 47 eingespeist. Dadurch wird die Buchse 27 nach oben und die Buchse 40 nach rechts verschoben, so daß die Stirnverzahnungen der Ringe 34 und 36 bzw. 49 und 51 wieder in Eingriff gelangen.

Ein besonderer Vorteil dieser Arbeitsweise ist darin zu sehen, daß durch die hydraulischen Verdreheinrichtungen über die Zahnstangen 31 und 44 lediglich eine Grobpositionierung des Schwenkgehäuses 12 bzw. des Werkzeugspindelgehäuses 10 vorgenommen werden muß. Feinpositionierung dagegen wird durch die Zähne der Stirnverzahnungen übernommen, so daß der Steuerungsaufwand für diese hydraulischen Verdreheinrichtungen relativ gering gehalten werden kann.

Durch das Einspeisen von Hydraulikflüssigkeit in die Hydraulikkanäle 38 und 47 in der Größenordnung von 160 bar wird darüber hinaus eine absolut feste Verbindung des Werkzeugspindelgehäuses 10 mit dem Schwenkgehäuse 12 und des Schwenkgehäuses 12 mit dem Spindelkasten 5 erzielt, so daß zusätzliche Einrichtungen zum Festlegen der Gehäuse untereinander sowie gegenüber dem Spindelkasten nicht mehr erforderlich sind.

Sollte während des Betriebes aus irgendwelchen Gründen der Druck der Hydraulikanlage abfallen, so daß die Gefahr besteht, daß die Stirnverzahnungen unbeabsichtigt außer Eingriff gelangen, so tritt die Sicherheitsverriegelung 52 in Funktion. Fällt nämlich der Druck in der Hydraulikanlage ab, so werden auch die Verriegelungskolben 54 nicht mehr beaufschlagt, so daß die Federn die Nasen 55 der Verriegelungskolben in die Verriegelungsnuten 56 pressen und damit die für den Auslauf der Maschine notwendige Verriegelung der Gehäuse untereinander sowie gegenüber dem Spindelkasten herstellen.

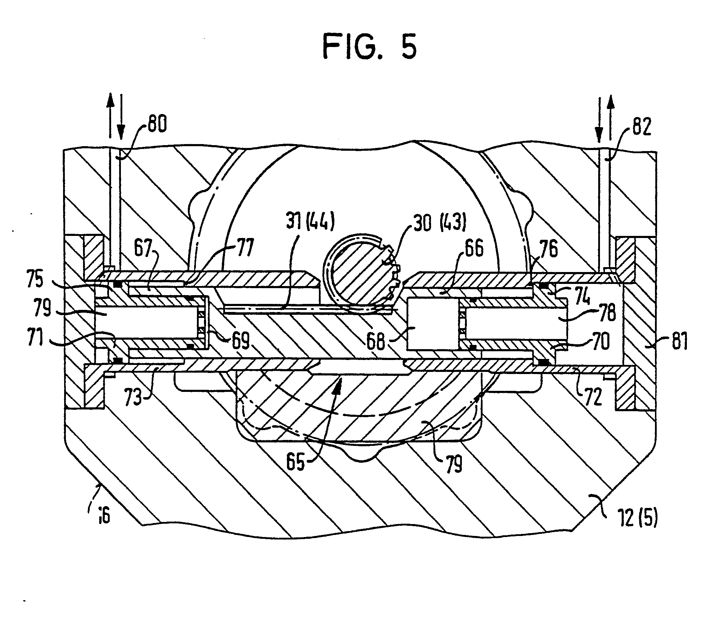

Das in Figur 5 dargestellte bevorzugte Ausführungsbeispiel einer hydraulischen Dreheinrichtung besteht aus einer Kolbenanordnung 65, die zwei jeweils an den Enden der Zahnstange 31 bzw. 44 angeordnete Kolben 66 und 67 besitzt. Diese Kolben gleiten im vorliegenden Ausführungsbeispiel in zwei getrennten Zylinderbüchsen. Es ist jedoch auch möglich, eine durchgehende Zylinderbüchse für beide Kolben vorzusehen und diese lediglich im Bereich der Ritzel 30 bzw. 43 auszusparen.

Die Kolben 66 bzw. 67 sind jeweils mit zu ihrer Stirnseite hin offenen Zylinderbohrungen 68 bzw. 69 ausgestattet. Diese Zylinderbohrungen 68 bzw. 69 sind als Sackbohrungen ausgebildet, in denen jeweils die kleine Kolbenstufe eines Stufenkolbens 70 bzw. 71 hin- und herverschiebbar gelagert ist. Diese Stufenkolben weisen neben ihrer im Durchmesser kleineren Kolbenstufe noch eine im Durchmesser größere Kolbenstufe 74 bzw. 75 auf, die in der jeweils zugeordneten Zylinderbüchse 72 bzw. 73 ebenfalls hin- und herverschiebbar gelagert ist.

Im vorliegenden Ausführungsbeispiel sind die Zylinderbüchsen 72 und 73 abgestuft ausgebildet, wobei die Kolben 66 bzw. 67 im Abschnitt kleineren Durchmessers und die Kolbenstufen 74 bzw. 75 der Stufenkolben im Abschnitt größeren Durchmessers angeordnet sind. Der Übergang der Zylinderbüchsen 72 bzw. 73 vom kleineren auf den größeren Durchmesser dient als Anschlag 76 bzw. 77 für die Stufenkolben 70 bzw. 71.

Wie aus Figur 5 ferner hervorgeht, sind die Stufenkolben 70 bzw. 71 mit einer zentralen Bohrung 78 bzw. 79 ausgestattet, die von der einen bis zur entgegengesetzten Stirnfläche durchgeht.

**Patentansprüche**

1. Universalfräskopf für eine Werkzeugmaschine, mit einem die Werkzeugspindel (9) tragenden Werkzeugspindelgehäuse (10), welches um eine senkrecht zur Werkzeugspindelachse verlaufende, in der Normalstellung des Fräskopfes vertikal ausgerichtete Achse (Z-Achse) drehbar in einem Schwenkgehäuse (12) gelagert ist, das um eine senkrecht zu dieser Achse verlaufende waagrechte Achse (Y-Achse) drehbar in einem Spindelkasten (5) der Werkzeugmaschine gelagert ist, mit einem Antrieb, der eine achsgleich mit der vertikal ausgerichteten Achse gelagerte Treibwelle (19) umfaßt, die über ein Kegelradpaar (25, 26) mit der Werkzeugspindel in Drehverbindung steht und eine achsgleich mit der waagrechten Achse gelagerte Antriebswelle (17) besitzt, die mit der Treibwelle in Drehverbindung steht, sowie mit Einrichtungen, mit denen das Werkzeugspindelgehäuse an dem Schwenkgehäuse sowie das Schwenkgehäuse an dem Spindelkasten lösbar festlegbar ist, dadurch gekennzeichnet, daß (in der Normalstellung des Fräskopfes betrachtet) die Achse der Werkzeugspindel (9) derart nahe an die Antriebswellenachse (13) herangelegt ist, daß die Unterkante (14) des Werkzeugspindelgehäuses (10) etwa mit der Unterkante (15) des Spindelkastens (5) fluchtet, wobei eine im Schwenkgehäuse (12) gelagerte, mit der Antriebswelle (17) einen stumpfen Winkel einschließende Verbindungswelle (18) vorgesehen ist, die mit ihrem einen Ende über Kegelräder (22, 21) mit der Antriebswelle (17) und mit ihrem anderen Ende über Kegelräder (23, 24) mit der Treibwelle (19) in Verbindung steht.

2. Universalfräskopf nach Anspruch 1, dadurch gekennzeichnet, daß das Schwenkgehäuse (12) jeweils konzentrisch zur Treibwelle (19) und zur Antriebswelle (17) eine Stirnverzahnung (35, 50) aufweist, die hydraulisch ein- und ausrückbar mit einer entsprechenden Stirnverzahnung am Werkzeugspindelgehäuse (10) bzw. am Spindelkasten (5) zusammenwirkt, und daß zum Verdrehen des Schwenkgehäuses (12) gegenüber dem Spindelkasten (5) und des Werkzeugspindelgehäuses (10) gegenüber dem Schwenkgehäuse (12) hydraulische Dreheinrichtungen (31, 44) vorgesehen sind.

3. Universalfräskopf nach Anspruch 2, dadurch gekennzeichnet, daß die Stirnverzahnung (35, 50) jeweils auf einem Ring (34, 36 bzw. 49, 51) angeordnet ist, der an dem Werkzeugspindelgehäuse (10), dem Schwenkgehäuse (12) und dem Spindelkasten (5) befestigt ist.

4. Universalfräskopf nach Anspruch 1, bei dem das Werkzeugspindelgehäuse (10) im Schwenkgehäuse (12) und das Schwenkgehäuse im Spindelkasten (5) jeweils über ein Lagerteil gelagert sind, dadurch gekennzeichnet, daß das Lagerteil als Buchse (27 bzw. 40) ausgebildet ist, die zumindest mit ihrer einen Stirnseite am Werkzeugspindelgehäuse (10) bzw. Schwenkgehäuse (12) befestigt und zumindest auf einem Teil ihrer Außenseite als Kolbenanordnung (32 bzw. 45) ausgebildet ist, welche in eine zugeordnete Zylinderanordnung im Schwenkgehäuse bzw. im Spindelkasten hineinragt.

5. Universalfräskopf nach Anspruch 4, dadurch gekennzeichnet, daß die Buchse (27 bzw. 40) auf ihrer Außenseite abgestuft ausgebildet ist.

6. Universalfräskopf nach Anspruch 2 und 4 oder 5, dadurch gekennzeichnet, daß die Buchse (27 bzw. 40) mit der hydraulischen Dreheinrichtung (31 bzw. 44) gekoppelt ist.

7. Universalfräskopf nach Anspruch 4 bis 6, dadurch gekennzeichnet, daß die Buchse (40) die Lagerung (42) für die Treib- bzw. Antriebswelle (17) trägt.

8. Universalfräskopf nach Anspruch 1, dadurch gekennzeichnet, daß die Verzahnung der Kegelräder (23, 24) derart gewählt ist, daß sie auch bei ausgerückter Stirnverzahnung (35 bzw. 50) im Eingriff stehen.

**Claims**

1. Universal milling head for a machine tool, comprising a tool spindle casing (10) supporting the tool spindle (9), which is mounted in bearings in a swivel casing (12) rotatable about an axis (Z-axis) which is aligned vertically when the milling head is in the normal position and extends perpendicular to the tool spindle axis, and which is mounted in bearings in a spindle stock (5) of the machine tool rotatable about a horizontal axis (Y-axis) extending perpendicular to the Z-axis, a drive, which includes a driven shaft (19) mounted in bearings along the same axis as the vertically aligned axis, which is rotatably connected with the tool spindle by a bevel gear pair (25, 26) and includes a driving shaft (17) mounted in bearings along the same axis as the horizontal axis, which is connected rotatably with the driven shaft, as well as devices with which the tool spindle casing can be detachably fixed to the swivel casing as well as the swivel casing to the spindle stock, characterized in that (as viewed with the milling head in the normal position) the axis of the tool spindle (9) is arranged so close to the axis (13) of the driving shaft that the lower edge (14) of the tool spindle casing (10) is roughly flush with the lower edge (15) of the spindle stock (5), a connecting shaft (18) being provided mounted in the swivel casing (12) and forming an obtuse angle with the driving shaft (17), which is connected to the driving shaft (17) at its one end by bevel gears (22, 21) and at its other end to the driven shaft (19) by bevel gears (23, 24).

2. Universal milling head according to claim 1, characterized in that the swivel casing (12) is provided with a spur gear tooth system (35, 50) concentric to the driven shaft (19) and to the driving shaft (17) respectively, which can be hydraulically engaged or disengaged and which operates together with a corresponding spur gear tooth system on the tool spindle casing (10) alternatively the spindle stock (5), and the hydraulic rotating devices (31, 44) are provided to rotate the swivel casing (12) with respect to the spindle stock (5) and the tool spindle casing (10) with respect to the swivel casing (12).

3. Universal milling head according to claim 2, characterized in that the spur gear tooth system (35, 50) is arranged in each case on a ring (34, 36, alternatively 49, 51), which is mounted on the tool spindle casing (10), the swivel casing (12) and the spindle stock (5).

4. Universal milling head according to claim 1, in which the tool spindle casing (10) and the swivel casing is mounted in a bearing part in the swivel casing (12) and the spindle stock (5) respectively, characterized in that the bearing part is formed as a bushing (27 alternatively 40) which is fixed, at least, with its one front face to the tool spindle casing (10) alternatively swivel casing (12) and is formed as a piston arrangement (32 alternatively 45) at least on a part of its outside, which projects into an associated cylinder arrangement in the swivel casing alternatively spindle stock.

5. Universal milling head according to claim 4, characterized in that the bushing (27 alternatively 40) is formed on its outside in steps.

6. Universal milling head according to claims 2 and 4 or 5, characterized in that the bushing (27 alternatively 40) is coupled to the hydraulic rotation device (31 alternatively 44).

7. Universal milling head according to claims 4 to 6, characterized in that the bushing (40) supports the bearing (42) for the driving or drive shaft (17).

8. Universal milling head according to claim 1, characterized in that the tooth arrangement of the bevel gears (23, 24) is chosen such that it remains in mesh even when the spur gear tooth system (35 alternatively 50) is disengaged.

**Revendications**

1. Tête de fraisage universelle pour machine-outil, constituée par un boîtier (10) qui reçoit la broche porte-outil (9) et qui est monté dans un logement pivotable (12) de manière à pouvoir tourner autour d'un axe (axe Z) vertical à la position normale de la tête de fraisage et disposé perpendiculairement à l'axe de la broche porte-outil, lequel logement est monté dans un carter de broche (5) de la machine-outil de manière à pouvoir tourner autour d'un axe horizontal (axe Y) disposé perpendiculairement à cet axe et, par un système d'entraînement qui comprend un arbre moteur (19) qui, monté coaxialement à l'axe vertical, est raccordé mobile en rotation à la broche porte-outil par l'intermédiaire d'une paire de roues coniques (25, 26), et comporte un arbre d'entraînement (17) qui, monté coaxialement à l'axe horizontal, est raccordé mobile en rotation à l'arbre moteur, ainsi que par des dispositifs permettant de fixer de façon amovible le boîtier de la broche porte-outil au logement pivotable et le logement pivotable au carter de broche, caractérisée par le fait que l'axe de la broche porte-outil (9) (considéré à la position normale de la tête de fraisage) est placé suffisamment près de l'axe (13) de l'arbre d'entraînement pour que l'arête inférieure (14) du boîtier (10) de la broche porte-outil soit sensiblement dans l'alignement de l'arête inférieure (15) du carter de broche (5) et qu'il est prévu un arbre de transmission (18) qui, monté dans le logement pivotable (12) et formant un angle obtu avec l'arbre d'entraînement (17), est raccordé, par l'une de ses extrémités, à l'arbre d'entraînement (17) par des roues coniques (22, 21) et, par son autre extrémité, à l'arbre moteur (19) par des roues coniques (23, 24).

2. Tête de fraisage universelle selon la revendication 1, caractérisée par le fait que le logement pivotable (12), concentriquement à l'arbre moteur (19) et à l'arbre d'entraînement (17), comporte respectivement une denture droite (35, 50) qui, embrayable ou désembrayable hydrauliquement, coopère avec une denture droite correspondante du boîtier (10) de la broche porte-outil ou du carter de broche (5) et qu'il est prévu des dispositifs de rotation hydrauliques (31, 44) pour le pivotement du logement (12) par rapport au carter de broche et du boîtier (10) de la broche porte-outil par rapport au logement pivotable (12).

3. Tête de fraisage universelle selon la revendication (2), caractérisée par le fait que les dentures droites (35, 50) sont respectivement disposées sur des anneaux (34, 36) ou (49, 51) qui sont fixés au boîtier (10) de la broche porte-outil, au logement pivotable (12) et au carter de broche (5).

4. Tête de fraisage universelle selon la revendication 1, dans laquelle le boîtier (10) de la broche porte-outil dans le logement pivotable (12) et le logement pivotable dans le carter de broche (5), sont respectivement montés par l'intermédiaire d'un élément d'appui, caractérisée par le fait que l'élément d'appui se présente sous la forme d'une douille (27, 40) qui est fixée sur le boîtier (10) ou le logement (12) au moins par l'une de ses faces frontales, et qui est réalisée, au moins sur une partie de sa face externe, sous la forme d'un piston (32, 45) qui fait saillie dans un cylindre y associé du logement pivotable ou du carter de broche.

5. Tête de fraisage universelle selon la revendication 4, caractérisée par le fait que la douille (27, 40) est réalisée étagée sur sa face externe.

6. Tête de fraisage universelle selon la revendication 2 et 4 ou 5, caractérisée par le fait que la douille (27, 40) est accouplée au dispositif de rotation hydraulique (31, 44).

7. Tête de fraisage universelle selon les revendications 4 à 6, caractérisée par le fait que la douille (40) porte les paliers (42) de l'arbre moteur ou de l'arbre d'entraînement (17).

8. Tête de fraisage universelle selon la revendication 1, caractérisée par le fait que la denture des roues coniques (23, 24) est choisie de manière à rester en prise même en cas de débrayage de la denture droite (35, 50).

# FIG. 1

FIG. 2

FIG. 3

0 120 302

FIG. 4

0 120 302

# FIG. 5